(19) Europäisches Patentamt
European Patent Office
Office européen des brevets

(11) Numéro de publication: **0 002 423**
**B1**

(12) **FASCICULE DE BREVET EUROPEEN**

(45) Date de publication du fascicule de brevet: **14.10.81**

(21) Numéro de dépôt: **78810028.7**

(22) Date de dépôt: **04.12.78**

(51) Int. Cl.³: **C 25 B 1/30**, D 06 F 35/00, C 01 B 15/01

(54) **Procédé et machine pour le lavage et le blanchiment de matières textiles.**

(30) Priorité: **06.12.77 CH 14876/77**

(43) Date de publication de la demande:
**13.06.79 Bulletin 79/12**

(45) Mention de la délivrance du brevet:
**14.10.81 Bulletin 81/41**

(84) Etats Contractants Désignés:
**BE CH DE FR GB IT LU NL SE**

(56) Documents cités:
**FR - A - 1 335 541**
**US - A - 3 616 442**
**US - A - 3 969 201**

(73) Titulaire: **BATTELLE MEMORIAL INSTITUTE**
***7 route de Drize***
**CH-1227 Carouge/Genève (CH)**

(72) Inventeur: **Porta, Augusto**
**31, avenue de Miremont**
**CH-1206 Geneve (CH)**
Inventeur: **Kulhanek, Antonin**
**47, avenue du Lignon**
**CH-1219 Le Lignon (CH)**
Inventeur: **Groult, Alain**
***"Les Fossets" - Juvigny***
**F-74100 Annemasse (FR)**
Inventeur: **Tournier, Hervé-Noël**
**"Le Riondet"**
**F-74520 Valleiry (FR)**

(74) Mandataire: **Dousse, Blasco et al,**
**7, route de Drize**
**CH-1227 Carouge/Genève (CH)**

**EP 0 002 423 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

Procédé et machine pour le lavage et le blanchiment de matières textiles

La présente invention a pour objet un procédé ainsi qu'une machine pour le lavage et le blanchiment de matières textiles.

Pour effectuer des opérations de lavage et de blanchiment à des fins domestiques et/ou industrielles, on utilise généralement des compositions détergentes du commerce dans lesquelles se trouve incorporé un agent de blanchiment, en plus des divers constituants fondamentaux et adjuvants habituellement contenus dans de telles compositions. L'incorporation, dès le stade de la fabrication, d'un agent de blanchiment à ces compositions détergentes du commerce n'est toutefois pas sans soulever un certain nombre de problèmes, tant en ce qui concerne le choix initial de l'agent de blanchiment à incorporer que le comportement ultérieur (en cours de stockage et/ou lors du processus de lavage et/ou après évacuation des eaux usées) des compositions détergentes ainsi pourvues d'un tel agent de blanchiment.

Ainsi, les compositions détergentes pourvues d'agent de blanchiment qui sont les plus commercialisées à l'heure actuelle sont des compositions solides (se présentant essentiellement sous forme pulvérulente), dans lesquelles l'agent de blanchiment est le plus souvent constitué par du perborate de sodium tetrahydraté. Il est généralement admis que le perborate de sodium constitue un agent de blanchiment très efficace, à condition toutefois que le bain de lavage soit porté à des températures voisines de la température d'ébullition. L'action blanchissante du perborate reste en effet relativement faible aux plus basses températures de lavage (en-dessous de 60 à 78°C), ce qui constitue un inconvénient particulièrement important dans le contexte actuel des économies d'énergie. On tente bien à l'heure actuelle d'ajoindre des activateurs de décomposition du perborate à ces compositions détergentes solides, en vue de permettre le lavage et le blanchiment à des températures plus basses. Mais ces tentatives ne s'avèrent pour l'instant pas entièrement satisfaisantes, et les formulations contenant de tels activateurs sont par ailleurs relativement coûteuses. L'utilisation du perborate comme agent de blanchiment dans les compositions détergentes entraîne encore un certain nombre d'autres inconvénients, dont la plupart sont liés à sa teneur souvent excessive (généralement supérieure à 15 à 20% en poids). Une trop forte teneur en perborate est en effet susceptible d'entraîner une détérioration des fibres textiles (notamment des fibres cellulosiques), ainsi qu'une atténuation des nuances de certains coloris (certains colorants étant an effet fortement sensibles à un excès d'oxydant). Une teneur excessive en perborate est également susceptible, dans le cas de compositions détergentes contenant des enzymes, d'exercer une influence néfaste sur l'action biologique de ces enzymes, bien que le perborate et le enzymes exercent normalement des actions complémentaires dans certains processus de destruction des salissures (salissures pigmentaires et protéiniques). Il est par ailleurs bien établi que les composés de bore contenus dans les eaux résiduaires de lavage exercent des effets nocifs sur l'environnement. Il existe en effet une certaine toxicité du bore, laquelle est plus marquée pour les plantes supérieures que pour les microorganismes et les animaux (effet antifertilisant). Les composés de bore n'étant pas éliminables par les procédés traditionnels de traitement des eaux, il en résulte que le contenu en dérivés du bore de certaines rivières arrive à atteindre des niveaux anormalement élevés, ce qui tend à rendre ces derniéres impropres à l'irrigation. Ces problèmes de pollution des eaux par les composés du bore deviennent si préoccupants qu'ils ont amené certains pays à prendre des dispositions légales en vue de limiter la teneur des compositions détergentes en perborate, ou voire même à l'interdire complètement. Le perborate de sodium présente enfin quelques inconvénients techniques tels que phénomènes de ségrégation dans les poudres (densité apparente élevée du grain de perborate), friabilité du grain (interférence des poussières du perborate sur la technologie de fabrication et l'hygiène du travail), et faible solubilité dans l'eau froide.

Afin de tenter de remédier aux inconvénients susmentionnés on a bien proposé de remplacer le perborate par d'autres agents de blanchiment tels que par exemple le percarbonate de sodium. L'efficacité de ces agents de remplacement s'avère cependant beaucoup moins bonne du point de vue blanchiment. Le choix des agents de blanchiment à incorporer dans les compositions détergentes solides reste par ailleurs bien évidemment limité aux seuls composés solides, ce qui exclut notamment toute possibilité d'adjonction d'un agent de blanchiment liquide tel que le peroxyde d'hydrogène (eau oxygénée), lequel est pourtant bien connu pour ses bonnes propriétés de blanchiment.

On constate actuellement l'apparition sur le marché des premières compositions détergentes liquides, qui sont normalement commercialisées sans fonction blanchissante. L'incorporation à ces compositions liquides d'un agent de blanchiment liquide comme le peroxyde d'hydrogène devient donc théoriquement possible, et cela a déjà fait au demeurant l'objet de diverses propositions dans ce sens. Mais une telle incorporation dès le stade de la fabrication n'est toutefois pas sans soulever de sérieux problèmes dans la pratique. Il est en effet bien connu que le peroxyde d'hydrogène constitue un composé relativement instable (et d'autant plus instable qu'il se trouve utilisé sous une forme plus diluée), de sorte que son incorporation à une composition détergente liquide requiert l'emploi de produits complexants ou stabilisants en vue d'assurer une stabilité correcte durant des périodes de stockage prolongées, (et d'éviter ainsi de trop grosses pertes d'oxygène actif avec le temps). Mais la présence de tels produits complexants a alors pour conséquence néfaste que la composition détergente liquide reste beaucoup trop stable au moment de son utilisation, de telle sorte qu'elle ne

peut libérer à un tel moment suffisamment d'oxygène actif, et à une vitesse suffisamment rapide, pour opérer un blanchiment réellement efficace. L'accroissement de la stabilité de l'eau oxygénée exige par ailleurs préférentiellement un milieu acide, ce qui est en relative contradiction avec les formulations générales des compositions détergentes où il est souhaitable d'avoir des constituants présentant un caractère basique afin de favoriser les opérations de lavage et de blanchiment. Le fait d'incorporer du peroxyde d'hydrogène aux compositions détergentes liquides dès le moment de leur fabrication peut en outre, dans le cas de compositions détergentes contenant des enzymes, avoir comme autre conséquence néfaste de pertuber l'activité biologique de ces enzymes, tant en cours de stockage que lors du déclenchement des opérations de lavage et de blanchiment.

Il est par ailleurs connu depuis longtemps de fabriquer du peroxyde d'hydrogène par voie électrolytique, par réduction de l'oxygène sur une cathode en milieu alcalin. A la connaissance de la demanderesse, il n'a cependant jamais été proposé jusqu'à présent d'intégrer un tel processus de fabrication électrolytique dans des opérations de lavage et de blanchiment de matières textiles.

La présente invention a précisément pour but de pallier les inconvénients susmentionnés, en proposant un procédé de lavage et de blanchiment de matières textiles basé sur l'emploi comme agent de blanchiment d'une forme particulièrement active de peroxyde d'hydrogène, incorporable au moment voulu dans le processus de lavage et produisible "in situ" immédiatement avant son emploi.

A cet effet, la présente invention a pour objet un procédé de lavage et de blanchiment de matières textiles au moyen d'un bain lessiviel aqueux contenant une composition détergente substantiellement dépourvue d'agent de blanchiment, caractérisé par le fait que ledit blanchiment est obtenu par incorporation audit bain lessiviel, au moment désiré, d'une solution aqueuse alcaline fraîchement préparée contenant des ions hydrogenoperoxydes, ladite solution aqueuse alcaline oxydante étant produite, immédiatement avant son incorporation audit bain lessiviel, par électro-reduction d'oxygène.

La présente invention a également pour objet une machine pour le lavage et le blanchiment de matières textiles, du type de celles comprenant notamment une enceinte destinée à contenir lesdites matières textiles à traiter, des moyens d'alimentation en eau de ladite enceinte, des moyens pour introduire une composition détergente dans ladite enceinte, des moyens pour former un bain lessiviel aqueux au sein de ladite enceinte par mélange de ladite composition détergente avec de l'eau et des moyens pour agiter relativement l'un par rapport à l'autre ledit bain lessiviel aqueux et lesdites matières textiles à traiter, caractérisée par le fait que ladite machine comprend en outre un réacteur électrochimique destiné à assurer la production d'une solution aqueuse alcaline oxydante contenant des ions hydrogenoperoxydes, et des moyens pour introduire, au moment désiré du programme de lavage, ladite solution aqueuse alcaline oxydante au sein dudit bain lessiviel aqueux.

Dans la présente description, l'expression "matières textiles" est une expression générale entendant englober des matières telles que les tissus, les fils ou autres matières fibreuses ou filamenteuses, ces matières pouvant être constituées en des matériaux organiques naturels, artificiels ou synthétiques.

On voit ainsi que l'une des caractéristiques essentielles du procédé et de la machine qui viennent d'être définis réside dans l'incorporation au titre d'agent de blanchiment, dans un bain lessiviel formé à partir d'une composition détergente simplifiée substantiellement dépourvue d'agent de blanchiment, d'une solution aqueuse alcaline oxydante contenant des ions hydrogenoperoxydes, cette solution étant produite "in situ" par voie électrochimique immédiatement avant son utilisation, et incorporée au moment exactement désiré dans le bain lessiviel.

Les compositions détergentes simplifiées susceptibles d'être utilisées dans la présente invention peuvent être constituées par toutes les compositions détergentes, connues ou à venir, qui sont substantiellement dépourvues d'agent de blanchiment. De telles compositions se composent généralement, ainsi qu'il est bien connu, de constituants fondamentaux ainsi que d'adjuvants plus ou moins facultatifs. Ces constituants fondamentaux comprennent essentiellement une base tensioactive ou détergente (susceptible d'être constituée par un mélange de différents agents tensioactifs anioniques et/ou non ioniques et/ou amphotères, etc...) ainsi qu'un auxiliaire de détergence ou "builder" (habituellement du tripolyphosphate de sodium), cependant que les adjuvants plus ou moins facultatifs comprennent habituellement des substances telles que des inhibiteurs de corrosion (par exemple silicate de sodium), des charges (par exemple sulfate de sodium), des agents anti-redéposition, des agents régulateurs de mousse, des enzymes, des azurants optiques, des parfums, etc...

Les compositions détergentes simplifiées susceptibles d'être utilisées dans la présente invention peuvent par ailleurs se présenter sous toutes les formes physiques habituellement rencontrées dans ce genre d'applications: poudre, granulat, gel, pâte, solution, émulsion, suspension, etc... L'essentiel est qu'on puisse former, par mélange d'une quantité correctement dosée de cette composition détergente simplifiée avec de l'eau, un bain lessiviel aqueux présentant les caractéristiques de détergence requises, en vue d'effectuer la mise en contact des matières textiles à traiter avec ce bain lessiviel.

Les matières textiles à laver et à blanchir étant mises en contact intime avec le bain lessiviel préparé à partir de la composition détergente simplifiée, on peut alors, à tout moment voulu, incorporer à ce bain lessiviel la solution de blanchiment produite par voie électrochimique.

La production par voie électrochimique de cette solution aqueuse alcaline contenant des ions hydrogenoperoxydes est essentiellement obtenue par électroréduction d'oxygène en présence d'une

solution alcaline initiale dans un réacteur électrochimique comprenant au moins un compartiment cathodique équipé d'une cathode poreuse et au moins un compartiment anodique équipé d'une anode chimiquement inerte vis-à-vis du milieu. La solution alcaline initiale ayant été introduite dans le compartiment cathodique du réacteur électrochimique, on fait alors circuler un gaz sous pression contenant de l'oxygène à l'intérieur de la cathode poreuse et on fait passer un courant électrique dans le réacteur, de façon à provoquer au contact de la surface active de la cathode la formation d'ions hydrogenoperoxydes (ainsi que d'ions hydroxyles) par réduction de l'oxygène. On observe alors une concentration progressive du catholyte en ions hydrogenoperoxydes et en ions hydroxyles au fur et à mesure que l'électrolyse se poursuit. L'électrolyse est arrêtée lorsque les concentrations en ions hydrogenoperoxydes et en ions hydroxyles du catholyte atteignent des valeurs désirées. Le catholyte peut alors être évacué vers l'extérieur du compartiment cathodique, en vue de l'incorporer dans la bain lessiviel au moment désiré du processus de lavage.

L'obtention des concentrations désirées en ions hydrogenoperoxydes et en ions hydroxyles pour la solution de blanchiment est essentiellement rendue possible grâce à l'emploi judicieux comme catholyte d'une solution alcaline initiale faiblement concentrée (concentration initiale du catholyte choisie inférieure à la concentration désirée en ions hydroxyles pour la solution de blanchiment), ainsi que grâce au choix des conditions dans lesquelles se déroule la réduction électrochimique, la mise en oeuvre de celle-ci entraînant une concentration progressive du catholyte en ions hydrogenoperoxydes et en ions hydroxyles, lequel est évacué vers l'extérieur lorsqu'il a atteint les concentrations désirées pour la solution de blanchiment.

De manière avantageuse, les paramètres régissant le processus électrochimique (concentration initiale de la solution alcaline, quantité d'électricité passant dans le réacteur, dimensionnement du réacteur, etc...) seront ajustés de façon que la solution évacuée du réacteur électrochimique présente respectivement une concentration en eau oxygénée totale (c'est-à-dire ions hydrogenoperoxydes $HO_2^-$ + eau oxygénée $H_2O_2$) comprise entre 0,1 et 10 grammes/litres de solution et un pH inférieur à 14.

Le choix de la concentration initiale de la solution alcaline à introduire dans le compartiment cathodique est en particulier absolument primordial. Cette concentration initiale doit en effet ne pas être trop élevée, si l'on désire que la solution de blanchiment finalement obtenue, et par conséquent le bain lessiviel dans lequel cette solution doit être incorporée, ne présentent pas une alcalinité trop élevée (la poursuite du processus électrochimique entraînant en effet une concentration progressive du catholyte en ions hydroxyles). Cette concentration initiale ne doit cependant pas être négligeable, pour des raisons de conductibilité si l'on désire obtenir un rendement acceptable en ce qui concerne la production en ions hydrogenoperoxydes. Il est en effet prouvé qu'un tel rendement peut devenir très mauvais si l'on opère avec une solution initiale présentant un pH sensiblement neutre. De façon hautement souhaitable, on choisira donc d'utiliser une solution initiale faiblement alcaline, dont le pH initial sera préférentiellement compris entre 10 et 13.

Comme alcali constitutif de cette solution initiale, on pourra a priori envisager d'utiliser n'importe quel alcali connu tel que la soude, la potasse... On choisira cependant plus spécialement d'utiliser de la soude, compte tenu de son coût peu élevé. En variante, on peut également envisager d'utiliser, comme alcali constitutif de cette solution initiale, l'un ou plusieurs des alcalis déjà présents à titre de constituants dans la composition détergente simplifiée, au lieu d'utiliser un alcali extérieur au système comme précédemment. Dans un tel cas, on pourra alors prévoir d'utiliser une composition détergente simplifiée présentant une formulation sensiblement modifiée selon laquelle la concentration en lesdits alcalis pourrait être sensiblement diminuée, ou voire même compolètement réduite à zéro (ces alcalis étant alors en effet apportés directement par la solution de blanchiment). Une telle variante présente l'avantage majeur d'éviter l'introduction d'un surcroît d'alcali au sein du bain lessiviel, et de permettre ainsi de maintenir ce bain lessiviel dans des limites d'alcalinité beaucoup plus acceptables. A titre d'exemple, on peut ainsi envisager d'utiliser un mélange de silicate de sodium et de sulfate de sodium comme constituant alcalin de la solution initiale à incorporer dans le compartiment cathodique du réacteur électrochimique (seul le silicate de sodium étant en fait vraiment alcalin dans le mélange susmentionné, et le sulfate servant surtout à assurer une bonne conductibilité électrique du milieu), et prévoir simultanément d'utiliser une composition détergente simplifiée dont la concentration en silicate de sodium et sulfate de sodium serait en outre fortement réduite, ou voire même complètement annulée.

La fabrication de la solution de blanchiment par voie électrolytique peut être effectuée selon deux méthodes principales, l'une discontinue et l'autre continue. La méthode discontinue consiste à travailler avec des volumes de catholyte limités et à recycler ces volumes jusqu'à ce qu'ils atteignent les concentrations désirées. Une telle méthode permet notamment d'utiliser un réacteur d'assez faibles dimensions, donc relativement peu coûteux. La méthode continue consiste, quant à elle, à travailler avec des volumes de catholyte choisis en fonction des performances de la cathode de façon telle qu'ils puissent être amenés aux concentrations voulues en un seul passage sur la cathode. Une telle méthode requiert l'utilisation d'un réacteur de dimensions plus importantes, mais elle permet par contre de supprimer les moyens de recyclage.

L'incorporation au sein du bain lessiviel de la solution de blanchiment produite électrolytiquement peut être effectuée à tout moment désiré du cycle de lavage. Cette incorporation peut être déclenchée

aussi bien immédiatement (c'est-à-dire dès le début du cycle de lavage) que de manière différée (c'est-à-dire seulement en cours du cycle de lavage). Une telle incorporation à déclenchement immédiat ou différé peut par ailleurs être effectuée aussi bien en une seule opération (introduction de la totalité de la solution en une seule fois) qu'en plusieurs opérations (introduction de fractions successives de solution de manière échelonnée dans le temps). Suivant la durée du processus de production électrolytique de la solution de blanchiment ainsi que suivant le moment choisi pour effectuer l'introduction de cette solution, on peut par ailleurs envisager de déclencher ce processus de production électrolytique soit simultanément, soit plus généralement antérieurement au déclenchement du processus de lavage (de façon que la solutioin de blanchiment puisse avoir atteint les concentrations désirées au moment choisi pour son introduction).

L'utilisation de la solution aqueuse alcaline oxydante selon l'invention comme substitut des agents de blanchiment habituellement incorporés dans les compositions détergentes conventionnelles présente un certain nombre d'avantages majeurs, dont l'un des principaux réside dans sa grande efficacité de blanchiment. La technique électrochimique employée pour la production d'une telle solution de blanchiment permet en effet notamment d'obtenir du peroxyde d'hydrogène sous une forme particulièrement active, à savoir l'ion hydrogenoperoxyde en milieu alcalin. Il est en effet généralement admis pour le peroxyde d'hydrogène, bien que le mécanisme des différentes réactions qui le concernent soit encore incomplètement compris, que c'est essentiellement l'ion hydrogenoperoxyde $HOO^-$ qui est responsable du blanchiment. La solution aqueuse alcaline utilisée dans le procédé selon l'invention est par conséquent notamment beaucoup plus active du point de vue blanchiment qu'une solution équivalente préparée avec du peroxyde d'hydrogène du commerce. Ce dernier, qui est habituellement commercialisé sous la forme d'une solution alcaline stabilisée présente en effet une teneur en ions hydrogenoperoxydes relativement faible, du fait que les réactions qui contribuent à la formation de ces ions se trouvent ici contrebalancées par des réactions inverses tendant à provoquer leur disparition (phénomène encore accentué par l'adjonction de stabilisants à l'eau oxygénée du commerce). Le fait, dans la présente invention, de pouvoir produire la solution de blanchiment immédiatement avant son utilisation permet par ailleurs d'éviter les problèmes de stabilité au stockage susceptibles de survenir avec le peroxyde d'hydrogène du commerce. Le fait de pouvoir en outre incorporer cette solution au moment voulu du processus de lavage rend possible une utilisation plus rationnelle de la composition détergente, en permettant, par exemple dans le cas d'une composition détergente contenant des enzymes, de n'incorporer la solution de blanchiment au bain de lavage qu'une fois l'opération de nettoyage enzymatique suffisamment avancée, de façon à procurer à cette dernière le maximum d'efficacité. La technique électrochimique utilisée pour produire une telle solution de blanchiment autorise de plus la mise en oeuvre d'un blanchiment "doux", apte à préserver la qualité des matières textiles à traiter en permettant de n'incorporer au bain de lavage que la quantité de solution juste nécessaire au blanchiment de ces matières textiles (pas de détérioration des fibres et des coloris). Le fait que le blanchiment puisse dans la présente invention être effectué à l'aide d'une solution à base de peroxyde présente enfin l'avantage primordial d'assurer des économies appréciables d'énergie, en permettant un blanchiment ment efficace à des températures relativement basses, ainsi que de minimiser les problèmes de nuisance en ce qui concerne les eaux résiduaires de lavage (pas de sous-produit polluant).

Le dessin annexé illustre, schématiquement et à titre d'exemple, une forme d'exécution ainsi qu'une variante d'une machine pour la mise en oeuvre du procédé de lavage et de blanchiment selon l'invention.

La figure 1 est une vue schématique, illustrant cette forme d'exécution.

La figure 2 est une vue en coupe schématique illustrant un détail, aggrandi, de la figure 1.

La figure 3 est une vue en coupe schématique, illustrant une variante du détail de la figure 2.

La figure 4 est un diagramme explicatif d'un premier mode de fonctionnement d'une machine utilisée pour des essais comparatifs.

La figure 5 est un diagramme analogue à celui de la figure 3, explicatif d'un second mode de fonctionnement de cette machine.

Sur la figure 1 se trouve représentée une machine à laver automatique 70, d'un type analogue à celles généralement rencontrées dans le commerce. Ce type de machine étant bien connu, on évitera par souçi de concision d'en décrire tous les éléments constitutifs, et on se contentera de décrire et de représenter seulement ceux de ces éléments qui sont nouveaux par rapport aux machines conventionnelles, ainsi que ceux des éléments connus situés à l'extérieur qui permettant à l'utilisateur de faire fonctionner la machine (ainsi, on ne décrira pas en particulier tous les éléments bien connus qui sont normalement situés à l'intérieur des machines à laver automatiques, tels que l'enceinte destinée à contenir les matières textiles à laver, les moyens permettant de former un bain lessiviel aqueux au sein de cette enceinte par mélange de la composition détergente avec de l'eau, les moyens permettant d'agiter relativement l'un par rapport à l'autre le bain lessiviel aqueux et les matières textiles à laver, les moyens pour chauffer l'eau et/ou le bain lessiviel aux températures désirées, les circuits de commande permettant la mise en oeuvre des différents programmes de lavage présélectionnés, etc...).

La machine automatique 70 représentée sur cette figure 1 comprend notamment, de manière connue, une entrée d'eau 71, reliée à un tuyau d'alimentation en eau 71a par l'intermédiaire d'une

électrovanne 71b (électrovanne actionnable par le circuit de commande de la machine); une entrée 72 pour l'introduction de la composition détergente; une sortie 73 pour l'évacuation des eaux usées; un cordon 74 pour l'alimentation en courant électrique de la machine; une porte d'accès 75 pour l'introduction des matières textiles à laver à l'intérieur de la machine; et un tableau de commandes 76 pour commander l'exécution des différents programmes de lavage, comprenant un interrupteur 76a et des boutons de programmation et de sélection 76b. De manière nouvelle, cette machine 70 comprend en outre une entrée additionnelle 77, raccordée par l'intermédiaire d'une électrovanne 19 (également actionnable par le circuit de commande de la machine) à la sortie 18 d'un réacteur électrochimique 1 (le réacteur électrochimique 1 est normalement destiné à être monté l'intérieur même du chassis de la machine. Il est cependant, par souçi de clarté, représenté au dessin comme étant situé l'extérieur de la machine). La machine automatique 70 est destinée à être alimentée en son entrée 72 par une composition détergente simplifiée substantiellement dépourvue d'agent de blanchiment, cependant que le réacteur électrochimique 1 est destiné à permettre la production d'une solution aqueuse alcaline oxydante contenant notamment des ions hydrogenoperoxydes, incorporable au moment voulu dans la machine par actionnement de l'électrovanne 19.

La figure 2 illustre de manière détaillée une forme d'exécution possible pour ce réacteur électrochimique 1. Le réacteur 1 représenté sur cette figure comprend une cellule élémentaire unique constituée par un carter sensiblement horizontal 2 fait en un matériau électriquement isolant. Ce carter 2 est divisé par un diaphragme plan 3 disposé horizontalement en deux compartiments superposés 4 et 5, respectivement, un compartiment cathodique inférieur 4 et un compartiment anodique supérieur 5. Le compartiment cathodique 4 est lui-même divisé par une cathode poreuse plane 6 disposée horizontalement en deux chambres superposées 7 et 8, respectivement, une chambre supérieure 7 et une chambre inférieure 8. La chambre supérieure 7 est destinée à contenir le catholyte, et elle est respectivement munie à ses extrémités opposées d'un orifice d'entrée 7a et d'un orifice de sortie 7b pour le catholyte. La chambre inférieure 8 est destinée à assurer l'alimentation en air sous pression (de l'ordre de 100 à 1000 grammes/$cm^2$) de la cathode poreuse 6, par l'intermédiaire d'un orifice d'entrée 8a raccordé à une source d'air sous pression (non représentée), l'excédent d'air sous pression étant susceptible de d'échapper par des soupapes de sécurité 8b. L'électrode poreuse 6 est de manière avantageuse faite en un matériau conducteur hydrophobe capable d'arrêter l'eau tout en laissant passer l'air. Cette cathode poreuse 6 peut ainsi, à titre d'exemple, être constituée par un feutre de carbone imprégné d'une suspension de téflon, ou par des blocs poreux de carbone vitreux à porosité ouverte, l'épaisseur de cette cathode étant par ailleurs avantageusement comprise entre 5 et 10 mm.

Le compartiment anodique 5 est, quant a lui, destiné à contenir l'anolyte, et il est respectivement équipé d'une anode 9 (ou contre-électrode) disposée contre sa paroi supérieure et de deux orifices d'entrée 5a et sortie 5b pour l'anolyte, situés à ses extrémités opposées. L'anode 9 est de manière avantageuse faite en un matériau conducteur chimiquement et électrochimiquement inerte vis-à-vis de l'anolyte. Cette anode 9 peut ainsi, à titre d'exemple, être constituée par un matériau tel que du titane platiné, du graphite, de l'acier inox convenablement choisi, ou tout autre matériau désigné habituellement sous le vocable "dimensionally stable anode". Le diaphragme plan 3 qui sépare l'anolyte du catholyte est enfin constitué de manière avantageuse par une membrane échangeuse de cations, ou par un diaphragme micro-poreux semi-perméable.

Dans le réacteur de la figure 2, les orifices de sortie 7b et d'entrée 7a de la chambre 7 sont en outre reliés entre eux par des moyens de recyclage du catholyte, formés d'un conduit 10 et d'un organe de pompage 11. De manière analogue, les orifices de sortie 5b et d'entrée 5a du compartiment anodique 5 sont reliés entre eux par des moyens de recyclage de l'anolyte formés d'un conduit 12 et d'un organe de pompage 13. Le réacteur comprend encore un premier conduit d'admission 14 branché par l'intermédiaire d'une vanne 15 sur une portion de conduit 12 voisine de l'orifice d'entrée 5a du compartiment anodique 5; un second conduit d'admission 16 branché par l'intermédiaire d'une vanne 17 sur une portion du conduit 10 voisine de l'orifice d'entrée 7a de la chambre 7; et un conduit d'évacuation 18 branché par l'intermédiaire d'une vanne 19 sur le conduit 10, en aval de l'organe de pompage 11.

Le premier conduit d'admission 14 est destiné à permettre l'introduction dans le compartiment anodique 5 d'une solution alcaline présentant une concentration initiale supérieure à celle que l'on désire obtenir pour la solution de blanchiment, cette solution initiale étant destinée à constituer l'anolyte du réacteur. Le second conduit d'admission 16 est quant à lui destiné à permettre l'introduction dans la chambre 7 d'une solution alcaline présentant une concentration initiale inférieure à celle que l'on désire obtenir pour la solution de blanchiment, cette solution étant destinée a constituer le catholyte du réacteur. Le conduit d'évacuation 18 est enfin destiné à permettre le prélèvement vers l'extérieur du catholyte, après que ce dernier ait subi un certain nombre de recyclages l'ayant amené aux concentrations désirées, le catholyte ainsi extrait constituant la solution de blanchiment.

Enfin, la cathode poreuse 6 et l'anode 9 du réacteur sont destinées à être respectivement reliées aux pôles négatif et positif d'une source de tension continue 20.

Le fonctionnement de la machine à laver ainsi décrite est le suivant: les vannes d'admission 15 et 17 du réacteur électrochimique 1 étant ouvertes et la vanne d'évacuation 19 fermée, on introduit par les conduits d'admission respectifs 14 et 16, respectivement, dans le compartiment anodique 5, une

solution alcaline ayant une concentration initiale supérieure à celle de la solution de traitement à fabriquer, et dans la chambre 7 équipée de la cathode 6, une solution alcaline ayant une concentration initiale inférieure à celle de la solution de blanchiment à fabriquer (les quantités de solution introduites étant fonction des volumes respectifs des chambres 5 et 7). Les vannes d'admission 15 et 17 sont alors refermées. (On peut en variante prévoir d'automatiser complètement les opérations susmentionnées, l'utilisateur n'ayant alors plus qu'à introduire des doses correctes d'alcali dans un réceptacle prévu à cet effet sur le réacteur 1). Les matières textiles à laver et à blanchir ayant été parallèlement introduites à l'intérieur de la machine 70, on sélectionne alors le programme de lavage désiré sur le tableau de commandes 76 et on met en marche l'ensemble par actionnement de l'interrupteur 76a. Cette mise en marche a en particulier pour effet de mettre le réacteur 1 sous tension, ainsi que de déclencher la mise en marche des moyens d'alimentation en air de la cathode 6, ainsi que les moyens de recyclage du catholyte et de l'anolyte (le démarrage du processus de lavage pouvant s'effectuer simultanément, ou au contraire postérieurement, à la mise en marche du réacteur). Les réactions se déroulent aux électrodes du réacteur sont alors, respectivement,

à l'anode: $2\ OH^- \rightarrow \frac{1}{2}O_2 + H_2O + 2\ e^-$

et à la cathode: $O_2 + H_2O + 2\ e^- \rightarrow HO_2^- + OH^-$

On voit ainsi que le passage du catholyte à travers la chambre 7 a notamment pour effet de provoquer, par réduction de l'oxygène à la cathode, la formation d'ions hydrogenoperoxydes $HO_2^-$ et d'ions hydroxyles $OH^-$, le recyclage permanent du catholyte entraînant par ailleurs une concentration progressive de ce catholyte en ions hydrogenoperoxydes et en ions hydroxyles. On voit de même que le passage de l'anolyte à travers le compartiment anodique 5 entraîne une réduction progressive de la concentration en alcali de cet anolyte. Le recyclage du catholyte et de l'anolyte se poursuit jusqu'à ce que les concentrations du catholyte en ions hydrogenoperoxydes et en ions hydroxyles atteignent les valeurs désirées, ce catholyte constituant alors la solution de blanchiment désirée. Le réacteur 1 est alors stoppé, et la solution de blanchiment introduite dans la machine à laver par l'intermédiaire de l'électrovanne 19, au moment voulu du programme de lavage. L'anolyte dont la concentration en alcali s'est fortement réduite est également évacué du réacteur et déchargé avec les eaux usées. Cet anolyte évacué est éventuellement susceptible, au lieu d'être déchargé dans les eaux usées, d'être récupéré en vue de servir de catholyte pour la fabrication d'une nouvelle fournée de solution de blanchiment (transfert schématisé au dessin par la ligne en pointillés 21).

Dans la forme d'exécution qui vient d'être décrite, la position strictement horizontale du réacteur n'est pas obligatoire. On peut même envisager, de manière particulièrement avantageuse, de disposer ce réacteur selon une position légèrement inclinée (de l'ordre de 10°), de façon à empêcher l'accumulation dans le compartiment anodique de l'oxygène se formant à l'anode, et de favoriser ainsi son évacuation à l'extérieur.

Dans le processus électrochimique décrit jusqu'à présent, on a indiqué que c'était la solution cathodique chargée en eau oxygénée qui constituait le produit utile directement utilisable comme solution de blanchiment, la solution anodique appauvrie en alcali ne constituant en fait qu'un sous-produit ne présentant que peu d'intérêt (mis à part la possibilité de récupération susmentionnée). Il est cependant possible d'envisager une valorisation de ce sous-produit que constitue la solution anodique, en apportant au processus électrochimique précédemment décrit des modifications minimes permettant de produire une solution anodique contenant de l'hypochlorite. Pour ce faire, il convient simplement d'introduire dans le compartiment anodique 5 une solution aqueuse initiale contenant à la fois de la soude ainsi que du chlorure de sodium. L'introduction dans le compartiment anodique de cette solution initiale contenant du chlorure de sodium rend par ailleurs possible l'introduction dans le compartiment cathodique d'une solution initiale contenant également du chlorure de sodium, ceci pour améliorer la conductivité des solutions et diminuer la chute ohmique à travers le séparateur échangeur cationique (ce chlorure de sodium ne participant pas à la réaction cathodique mais servant seulement de sel support).

La présence du chlorure de sodium en solution dans le compartiment anodique a pour but d'entraîner la formation de chlore gazeux au contact de l'anode, selon la réaction:

$$2\ Cl^- \rightarrow Cl_2 + 2\ e^-$$

le chlore gazeux ainsi formé réagissant avec la soude pour donner de l'hypochlorite, selon la réaction:

$$Cl_2 + 2\ NaOH \rightarrow NaOCl + NaCl + H_2O$$

Le recyclage permanent de l'anolyte entraîne donc (ainsi qu'on peut le constater en examinant l'ensemble des réactions se déroulant dans le compartiment anodique), une concentration progressive de cet anolyte en hypochlorite, ainsi qu'une réduction progressive de sa concentration en soude.

La solution anodique obtenue en fin de recyclage, chargée en hypochlorite, peut alors être utilisée en combinaison avec la solution cathodique chargée en eau oxygénée, en vue d'opérer le lavage/blanchiment. De manière avantageuse, on effectuera un tel traitement en amenant d'abord la solution anodique chargée en hypochlorite puis la solution cathodique chargée en eau oxygénée au

contact du matériau à traiter. L'utilisation combinée d'hypochlorite et d'eau oxygénée présente l'avantage majeur d'entraîner la formation d'oxygène "singlet", lequel s'avère être un excellent agent oxydant.

Dans les formes d'exécution sus-décrites, on peut par ailleurs envisager de remplacer la cellule unique 1 du réacteur par une pluralité de cellules (batterie) montées en série à la suite les unes des autres, en vue de réduire la durée du processus de fabrication électrolytique.

La figure 3 illustre une autre variante possible de réacteur électrochimique incorporable à la machine selon l'invention, suivant laquelle on utilise un réacteur du type à "cellule ouverte", destiné à permettre la fabrication de la solution de blanchiment selon une méthode continue. Le réacteur électrochimique représenté sur cette figure 3 comprend une cellule élémentaire unique 31 de forme tubulaire. Cette cellule 31 se compose de deux enveloppes tubulaires poreuses concentriques 32 et 33 au fond arrondi, à savoir, un enveloppe extérieure 32 faite en un matériau poreux électriquement isolant microporeux hydrophile tel qu'une toile ou feutre (par exemple en nylon, fibre de verre ou polyethylène). L'extrémité ouverte de ces enveloppes 32 et 33 est fermée par un couvercle plant 34 fait en un matériau isolant. L'enveloppe intérieure 33 est appelée à jouer le rôle d'un diaphragme microporeux divisant la cellule 31 en deux compartiments coaxiaux 35 et 36, respectivement, un compartiment anodique central 35 de forme cylindrique, et un compartiment cathodique périphérique 36 de forme annulaire. Le compartiment anodique central 35 est équipé d'une anode tubulaire poreuse 37 disposée contre la paroi interne du diaphragme microporeux 33, cette anode poreuse 37 étant faite en un matériau tel que du graphite poreux ou du carbone vitreux poreux. Ce compartiment anodique 35 est destiné à contenir l'anolyte, et il est muni à sa partie supérieure d'un orifice d'entrée 38 traversant le couvercle 34. Le compartiment cathodique périphérique 36 est quant à lui rempli par un lit tassé de particules électriquement conductrices 39 (telles que des granules de graphite et de charbon actif ou des fibres de carbone), destinées à servir de cathode tridimensionnelle. Ce lit est rendu partiellement hydrophobe par un traitement avec une suspension de téflon. Ce lit de particules 39 est traversé sur toute sa longueur par un conduit 40 percé d'une mutliplicité d'ouvertures, dont les extrémités sont respectivement raccordées à un orifice d'entrée 40a et un orifice de sortie 40b ménagés en deux endroits diamétralement opposés dans le couvercle 34. Autour de ce conduit 40 se trouve enroulé un collecteur de courant filiforme 41 (par exemple en or), destiné à être raccordé au pôle négatif d'une source de tension continue 42 dont l'autre pôle positif est raccordé à l'anode 37.

Le conduit percé 40 est destiné à être raccordé par l'intermédiaire de l'orifice d'entrée 40a à une source d'air sous pression 43 capable de délivrer de l'air froid sous une pression de l'ordre de 20 à 50 $g/cm^2$, le conduit 40 étant ainsi chargé d'assurer l'alimentation en air sous pression de la cathode dispersée 39 (l'air froid ayant pour but de maintenir l'intérieur de la cellule 1 à une température de l'ordre de 15 à 20°C, de façon à optimaliser le rendement de l'électroréduction. L'orifice d'entrée 38 du compartiment anodique 35 est enfin destiné à être raccordé, par l'intermédiaire d'un organe de pompage 44, à un réservoir (non représenté) contenant une solution aqueuse alcaline dont la concentration est sensiblement identique (ou légèrement supérieure) à la concentration en alcali de la solution de blanchiment que l'on désire fabriquer. Cet organe de pompage 44 est chargé d'alimenter de façon continue le compartiment anodique 35 en solution aqueuse alcaline sous pression, le pression sous laquelle cette solution aqueuse alcaline est introduite étant choisie de façon que le compartiment anodique 35 soit en surpression permanente par rapport au compartiment cathodique 36.

La cellule 31 est enfin montée à l'intérieur d'un récipient 47 (représenté en pointillés au dessin) dont le fond comporte un orifice de sortie 47a. Cet orifice de sortie 47a est destiné à être raccordé, par l'intermédiaire du conduit 18 et de l'électrovanne 19, à l'orifice d'entrée 77 de la machine 70 (fig. 1).

Le réacteur électrochimique qui vient d'être décrit fonctionne de la manière suivante: le choix des concentrations en eau oxygénée et en alcali de la solution de blanchiment qu'on désire fabriquer ayant été fixé, on met sous tension la cellule 31 et on met en marche les moyens d'alimentation en solution aqueuse alcaline du compartiment anodique 35 ainsi que les moyens d'alimentation en air de la cathode dispersée 39, tout en maintenant le compartiment anodique 35 en surpression constante par rapport au compartiment cathodique 36. La solution aqueuse alcaline qui s'écoule dans le compartiment anodique 35 (constituant ainsi l'anolyte) subit au contact de l'anode 37 la réaction anodique (réaction identique à celle énoncée précédemment), de sorte qu'elle se charge en oxygène tout en perdant une partie de sa concentration en alcali, cette solution appauvrie en alcali traversant ensuite le diaphragme microporeux 33 sous l'effet de la surpression. Arrivée dans le compartiment cathodique 36, cette solution appauvrie en alcali (qui constitue ainsi le catholyte) subit alors la réaction cathodique (réaction également identique à celle énoncée précédemment), de sorte qu'elle se charge notamment en ions hydrogenoperoxydes et en ions hydroxyles avant de s'écouler à l'extérieur sous formes de gouttelettes 45 sur les parois extérieures de la céramique poreuse 32. Les paramètres régissant le fonctionnement de la cellule 31 (tension et densité de courant appliqués à la cellule, pressions appliquées dans les compartiments cathodique et anodique, etc...) sont choisis de façon que l'enrichissement en ions hydrogenoperoxydes et en ions hydroxyles du catholyte puisse atteindre les valeurs de concentration fixées pour la solution de blanchiment au moment où ce catholyte est évacué à l'extérieur sous la forme de gouttelettes 45, de sorte que l'ensemble de ces gouttelettes 45 récupérées par le récipient 47 constitue la solution de blanchiment destinée à être incorporée au moment voulu dans la machine 70,

par l'intermédiaire de l'électrovanne 19.

En variante, on peut également envisager de supprimer complètement le récipient intermédiaire 47 ainsi que l'électrovanne 19 (fig. 3) et d'intégrer la cellule 31 directement à l'intérieur de l'enceinte destinée à contenir le bain lesiviel, de façon à permettre une introduction continue de la solution de blanchiment au sein du bain lessiviel, sous forme de "goutte à goutte".

On va maintenant décrire des essais comparatifs de détergence entre le procédé de lavage et de blanchiment selon l'invention (utilisation combinée d'une composition détergente simplifiée dépourvue d'agent de blanchiment et d'une solution de blanchiment produite électrochimiquement) et des procédés de lavage plus classiques, effectués au moyen de compositions détergentes pourvues d'un de blanchiment conventionnel.

Pour effectuer ces différents essais, on utilise alternativement comme compositions détergentes de base:

— une composition détergente conventionnelle pourvue d'un agent de blanchiment, constituée par une poudre à lessiver bien connue du commerce (contenant environ 25% en poids de perborate de sodium). Cette composition, qui est destinée à servir de référence pour les diverses mesures d'efficacité de détergence, sera désignée par le symbole RF dans la suite;

— une composition détergente simplifiée dépourvue d'agent de blanchiment, dont la formulation a été mise au point par la demanderesse, et qui sera désignée par le symbole BT dans la suite. Cette composition BT comprend les constituants suivants (quantités exprimées en grammes):

| | | | |
|---|---|---|---|
| Alkylarylsulfonate de sodium (à 35%) | : | 43,0 g | Base tensio-active |
| Alcool gras en $C_{18}$ condensé avec 25 oxyde d'éthylene | : | 4,5 g | Base tensio-active |
| Nonylphénol condensé avec 25 oxyde de d'éthylène | : | 4,5 g | Base tensio-active |
| Savon | : | 4,5 g | Base tensio-active |
| Tripolyphosphate de sodium | : | 52,5 g | |
| Silicate de sodium à 49° Bé (45% en poids) | : | 23,5 g | |
| Sulfate de sodium | : | 15,0 g | |
| Carboxyméthyl cellulose | : | 1,5 g | |
| acide Ethylène diamine tétraacétique | : | 1,0 g | |
| Enzymes protéolytiques (Esperase M 40) | : | 0,75 g | |
| Azurants optiques (optazur) | : | 0,75 g | |

— et une composition détergente BT' en tous points identique à la composition BT sus-définie, mis à part le fait qu'elle ne contient ni silicate et ni sulfate de sodium.

La composition détergente BT est utilisée dans les essais en combinaison avec l'un ou l'autre des deux agents de blanchiment suivants:

— perborate de sodium, introduit directement dans la composition BT (BT + perborate)

— solution de peroxyde d'hydrogène du commerce, introduit dans le bain lessiviel en début de lavage (BT + $H_2O_2$ commercial).

La composition détergente BT' est quant à elle utilisée dans les essais en combinaison avec la solution de blanchiment produite électrochimiquement selon l'invention (BT' + $H_2O_2$ produit électrochimiquement), cette solution étant introduite au moment voulu dans le bain lessiviel. Cette solution est fabriquée au moyen d'un réacteur analogue à celui de la figure 2, à partir d'une solution alcaline initiale contenant un mélange de silicate et de sulfate de sodium.

Le réacteur utilisé présente les caractéristiques suivantes:

— cathode en feutre de graphite rendue hydrophobe en profondeur par un traitement approprié;

— anode en titane platiné;

— séparateur du type membrane échangeuse cationique vendue dans le commerce sous le nom de NAFION 425 (par la firme Dupont de Nemours). La surface du séparateur est de 2,50 $dm^2$.

A titre d'exemple, pour fabriquer avec un tel réacteur une solution de blanchiment contenant

notamment 2,25 g/l d'eau oxygénée à partir d'un mélange contenant 7,5 g/l de sulfate de sodium et 11,75 g/l de silicate de sodium à 49°Bé, on procède de la façon suivante: on introduit respectivement, dans le compartiment cathodique, une solution alcaline, initiale contenant 7,5 g/l de sulfate de sodium et 11,75 g/l de silicate de sodium à 49°Be, et dans le compartiment anodique, une solution aqueuse de soude présentant une concentration initiale en soude égale à 40 g/l, les volumes de solution respectifs introduits dans chacun des compartiments étant de 2000 ml (la température de ces solutions étant par ailleurs maintenue à 22°C). On met ensuite le réacteur sous tension, et on met en marche les moyens d'alimentation en air de la cathode ainsi que les moyens de recyclage du catholyte et de l'anolyte. La tension de la cathode est réglée de façon à être égale à — 800 mV par rapport à une électrode au calomel (ce qui correspond à une différence de potential aux bornes de la cellule égale à 2,4 Volts et à une densité de courant moyenne de 10 mA/cm$^2$). On procède au recyclage du catholyte et de l'anolyte pendant 240 mn, temps au bout duquel le catholyte atteint la concentration désirée en eau oxygénée, (ce temps pouvant bien entendu être considérablement réduit, en utilisant une pluralité de cellules montées en série au lieu d'une cellule unique, et/ou en augmentant les dimensions de ces cellules). Le catholyte est alors évacué vers l'extérieur (on en recueille 2000 ml) pour être utilisé comme solution de blanchiment.

Les différents essais sont effectués au moyen d'une machine à laver automatique STATOMATIC 433 commercialisée par la Société Thomson-Brandt (à proximité de laquelle se trouve disposé le réacteur électrochimique susmentionné). Ces essais sont conduits dans les conditions suivantes:

— quantité approximative d'eau introduite automatiquement dans la machine: 15 litres (dureté de l'eau = 14,5°F)

— composition détergente de base incorporée: 150 g pour les compositions RF et BT et 113 g pour la composition BT'

— agents de blanchiment (perborate, $H_2O_2$ commerce, $H_2O_2$ produit électrochimiquement) susceptibles d'être incorporés en combinaison avec les compositions BT et BT': voir les différents essais ci-après,

— matières textiles à laver et à blanchir: charge de linge propre de 2 kg, au sein de laquelle sont réparties de manière homogène des bandes de tissus "tests" No 103 (bandes souillées artificiellement) préparées par l'EMPA (Suisse). Ces bandes comportent essentiellement deux types de salissures, à savoir: des salissures de nature albumineuse (coton sali de sang-lait-encre de chine) et des salissures dites blanchissables (coton teint du noir de soufre et/ou coton écru et/ou coton sali de vin rouge).

Ces essais sont effectués sans prélavage selon deux programmes différents:

— programme I: la courbe donnant l'évolution de la température du bain lessiviel au cours du cycle de lavage selon ce programme est représentée à la figure 4 (durée de lavage = 50 minutes; température maximale atteinte = 76°C).

— programme II: paramètres du cycle de lavage correspondant à ce programme donnés par la courbe de la figure 5 (duréede lavage = 47 minutes; temperature maximale atteinte = 54°C).

L'efficacité de détergence correspondant à chacun de ces essais est déterminée par des mesures de réflectance de la lumière au moyen d'un réflectomètre de type MACBETH, effectuées sur les bandes de tissu de l'EMPA, respectivement, avant et après lavage de ces bandes.

Par souçi de clarté, l'efficacité de détergence correspondant à un essai déterminé X sera exprimée de manière relative, en la rapportant à celle correspondant à un essai de référence A effectué dans des conditions opératoires analogues à l'aide de la poudre à lessiver de référence RF. Cette efficacité relative, exprimable en %, est donnée par la relation:

$$\frac{E_x — E_A}{E_A}$$

où $E_x$ et $E_A$ désignent les éclaircissements procurés, respectivement, par l'essai déterminé X et par l'essai de référence A, l'éclaircissement E étant lui-même donné par la relation:

$$E = R \text{ après lavage} - R \text{ lavant lavage}$$

où R désigne la réflectance mesurée

I. *Essais selon le programme I*

On réalise les différents essais suivants:

1) *Essai A*: (RF)

— 150 g de composition détergente RF

2) *Essai B*: (BT + perborate)

— 150 g de composition BT

— 40,5 g de perborate (soit 27% de perborate calculé sur la matière active)

3) *Essai C*: (BT + $H_2O_2$ commercial)

— 150 g de composition BT

— 26 g de $H_2O_2$ à 32% (commercialisé par la Société Air Liquide), ce qui équivaut à 25% de perborate.

4) *Essai D*: (BT' + $H_2O_2$ produit électrochimiquement)

4—1) *Essai D1*:

— 113 g de composition BT'

— 2 litres de solution de blanchiment contenant notamment 2,25 g/l d'eau oxygénée (eau oxygénée totale) = ions hydrogenoperoxydes + eau oxygénée et 2,25 g/l de sulfate de sodium et 11,75 g/l de silicate de sodium à 49°Be (solution fabriquée de la manière susmentionnée). Cette concentration en eau oxygénée correspond à 4,5 g d'$H_2O_2$ à 100%, ce qui équivaut à 15,6% de perborate. La solution est introduite dans le bain lessiviel en début du cycle de lavage.

4—2 *Essai D2*

— 113 g de composition BT'

— 2 litres de solution de blanchiment contenant 1,6 g/l d'eau oxygénée et 1,5 g/l de sulfate de sodium et 11,75 g/l de silicate de sodium à 49°Be. Cette concentration en eau oxygénée correspond à 3,2 g d'$H_2O_2$ à 100%, ce qui équivaut à 11,6% de perborate. La solution est introduite dans le bain lessiviel seulement 30 minutes après le début du cycle de lavage.

Les résultats de détergence obtenus pour ces différents essais sont reportés dans le tableau ci-après:

Efficacité de détergence relative par rapport à l'essai de référence A (en %)

| | Sur les salissures de nature albumineuse | Sur les salissures dites blanchissables |
|---|---|---|
| A | O | O |
| B | – 4% | + 12,5% |
| C | + 9% | + 7,5% |
| D1 | + 43% | + 54% |
| D2 | + 62,5% | + 38,5% |

D'après ce tableau, on constate que les résultats de détergence procurés par les essais B (BT + perborate) et C (BT + $H_2O_2$ commerce) sont sensiblement comparables à ceux procurés par la lessive de référence RF bien connue du commerce (essai A), cependant que les résultats procurés par le procédé selon l'invention (essais D1 et D2) s'avèrent par contre nettement supérieurs.

Les mesures effectuées sur les salissures de nature albumineuse permettent notamment de juger de l'efficacité des enzymes proteolytiques (il est en effet bien connue que les agents oxydants en général perturbent l'action enzymatique). L'obtention de l'efficacité la meilleure pour l'essai D2 démontre en particulier tout l'intérêt d'une incorporation différée de l'eau oxygénée, qui autorise une action plus efficace des enzymes durant les trentes premières minutes du cycle de lavage.

Les mesures effectuées sur les salissures de type blanchisable permettent quant à elles de juger de l'efficacité de l'agent de blanchiment. Ces mesures démontrent l'efficacité nettement supérieure de la solution de blanchiment selon l'invention sur les agents de blanchiment plus conventionnels. Il convient en plus de souligner qu'un tel résultat est obtenu, dans le procédé selon l'invention, avec des quantités d'agent de blanchiment notablement inférieures (environ la moitié) à celles présentes dans la lessive de référence.

II. *Essais selon le programme II*

On réalise les différents essais suivants:

1) *Essai A, B et C:* identiques à ceux effectués selon le programme I

2) *Essai D:* (BT' + $H_2O_2$ produit électrochimiquement)

— 113 g de composition BT'

— 1 l de solution de blanchiment contenant 3,1 g/l d'eau oxygénée et 15 g/l de sulfate de sodium et 11,75 g/l de silicate de sodium à 49°Be. La concentration en eau oxygénée correspond à 3,1 g d'$H_2O_2$ à 100%, ce qui équivaut à 11.3% de perborate. La solution est introduite dans le bain lessiviel en début du cycle de lavage.

Les résultats de détergence obtenus pour ces différents essais sont reportés dans le tableau ci-après:

Efficacité de détergence relative par rapport
à l'essai de référence A (en %)

| Sur les salissures de nature albumineuse | | Sur les salissures dites blanchissables |
|---|---|---|
| A | O | O |
| B | + 16% | + 5,5% |
| C | − 11% | − 17,5% |
| D | + 10,5% | + 53% |

Ce tableau permet notamment de démontrer l'efficacité supérieure au point de vue blanchiment du procédé selon l'invention par rapport aux procédés de lavage classiques utilisant des agents de blanchiment plus conventionnels.

**Revendications**

1. Procédé de lavage et de blanchiment de matière textiles au moyen d'en bain lessiviel aqueux contenant une composition détergente substantiellement dépourvue d'agent de blanchiment, caractérisé par le fait que ledit blanchiment est obtenu par incorporation audit bain lessiviel, au moment désiré, d'une solution aqueuse alcaline fraîchement préparée contenant des ions hydrogénopéroxydes, ladite solution aqueuse alcaline oxydante étant produite immédiatement avant son incorporation audit bain lessiviel par électroréduction d'oxygène.

2. Procédé selon la revendication 1, caractérisé par le fait que pour produire ladite solution aqueuse alcaline de blanchiment par voie électrochimique:

— on utilise un réacteur électrochimique comprenant au moins un compartiment cathodique équipé d'une cathode poreuse et au moins un compartiment anodique équipé d'une anode électrochimiquement inerte vis-à-vis du milieu alcalin, et un séparateur entre les compartiments cathodiques et anodiques,

— on introduit dans ledit compartiment cathodique une solution alcaline initiale faiblement concentrée destinée à constituer le catholyte et une solution plus concentrée dans le compartiment anodique,

— on fait circuler sous pression un gaz contenant de l'oxygène à l'intérieur de ladite cathode poreuse,

— on met ledit réacteur sous tension, de façon à provoquer sur la surface active de ladite cathode la formation d'ions hydrogénoperoxydes et d'ions hydroxyles par réduction de l'oxygène, ladite réduction entraînant une augmentation de concentration progressive dudit catholyte en ions hydrogénoperoxydes et en ions hydroxyles,

— et on fait passer dans ledit réacteur une quantité d'électricité suffisante pour que lesdites concentrations en ions hydrogénoperoxydes et en ions hydroxyles dudit catholyte atteignent des valeurs désirées, les conditions et paramètres opératoires (pressions et débits dans les compartiments électrodiques ainsi que porosité du séparateur) étant adaptées pour éviter un retour du catholyte en direction de l'anode, le catholyte ayant ainsi atteint les concentrations désirées constituant alors ladite solution de blanchiment.

3. Procédé selon la revendication 2, caractérisé par le fait que le pH de ladite solution alcaline initiale faiblement concentrée est compris entre 10 et 13.

4. Procédé selon la revendication 2, caractérisé par le fait que l'alcali constitutif de ladite solution alcaline initiale est de la soude.

5. Procédé selon la revendication 2, caractérisé par le fait que le constituant alcalin de ladite solution alcaline initiale est formé d'un mélange de silicate et de sulfate de sodium, la composition détergente substantiellement dépourvue d'agent de blanchiment que est contenue dans ledit bain lessiviel étant alors en outre choisie substantiellement dépourvue de silicate et de sulfate de sodium.

6. Procédé selon la revendication 1, caractérisé par le fait que ladite solution de blanchiment est incorporée audit bain lessiviel en début du cycle de lavage.

7. Procédé selon la revendication 1, caractérisé par le fait que ladite solution de blanchiment est incorporée audit bain lessiviel en cours de cycle de lavage.

8. Procédé selon la revendication 1, caractérisé par le fait que ladite solution de blanchiment est incorporée audit bain lessiviel en une seule fois.

9. Procédé selon la revendication 1, caractérisé par le fait que ladite solution de blanchiment est incorporée audit bain lessiviel par fractions successives échelonnées dans le temps.

10. Procédé selon la revendication 1, caractérisé par le fait que ladite composition détergente contenue dans ledit bain lessiviel comporte des enzymes, ladite solution de blanchiment étant incorporée audit bain lessiviel lorsque l'opération de nettoyage enzymatique est suffisament avancée.

11. Procédé selon la revendication 2, caractérisé par le fait que la solution anodique contient du

NaCl qui est oxydé anodiquement en NaOCl.

12. Procédé selon la revendication 11, caractérisé par le fait qu'en plus du catholyte contenant l'hydroperoxyde, on incorpore audit bain lessiviel ledit anolyte chargé en hypochlorite.

13. Procédé selon la revendication 2, caractérisé par le fait qu'on utilise un réacteur comprenant une pluralité de cellules élémentaires montées en série.

14. Procédé selon la revendication 2, caractérisé par le fait qu'on utilise l'électrolyte ayant servi d'anolyte lors d'un cycle précédent et dont la teneur en alcali a été abaissée lors de cette opération comme catholyte dans l'opération d'électroréduction suivante pour obtenir une nouvelle portion de solution de blanchiment.

15. Machine pour le lavage et le blanchiment de matières textiles, du type de celles comprenant notamment une enceinte destinée à contenir lesdites matières textiles à traiter, des moyens d'alimentation en eau de ladite enceinte, des moyens pour introduire une composition détergente dans ladite enceinte, des moyens pour former un bain lessiviel aqueux au sein de ladite enceinte par mélange de ladite composition détergente avec de l'eau et des moyens pour agiter relativement l'un par rapport à l'autre ledit bain lessiviel aqueux et lesdites matières textiles à traiter, caractérisée par le fait que ladite machine comprend en outre un réacteur électrochimique déstiné à assurer la production in situ d'une solution aqueuse alcaline oxydante contenant des ions hydrogénoperoxydes et des moyens pour introduire, au moment désiré du programme de lavage, ladite solution aqueuse alcaline oxydante au sein dudit bain lessiviel aqueux.

**Claims**

1. A process for washing and bleaching textile materials by means of an aqueous wash bath containing a detergent composition substantially free from bleaching agent, characterized in that said bleaching is carried out by incorporating into said wash bath, at the required moment, a freshly prepared aqueous alkaline oxidising solution containing hydrogen peroxide ions, said aqueous alkaline oxidising solution being produced immediately before its incorporation into said wash bath by oxygen electroreduction.

2. A process according to claim 1, characterized in that said aqueous alkaline oxidising solution is produced electrochemically by:

— using an electrochemical reactor comprising at least one cathode compartment fitted with a porous cathode, and at least one anode compartment fitted with an anode which is electrochemically inert towards the medium and a separator between the anode and cathode compartments,

— feeding into said cathode compartment an initial weakly concentrated alkaline solution to constitute the catholyte and a more concentrated solution into the anodic compartment,

— circulating under pressure a fluid containing oxygen through the inside of said porous cathode,

— voltage powering said reactor so as to cause the formation of hydrogen peroxide ions and hydroxyl ions on the active surface of said cathode by reduction of oxygen, said reduction giving rise to a progressively increasing concentration of hydrogen peroxide ions and hydroxyl ions in said catholyte,

— and passing through said reactor a quantity of electricity sufficient for said hydrogen peroxide ion and hydroxyl ion concentration in said catholyte to reach the required value, the operating conditions and parameters (pressures and flow in the electrodic compartments and also the porosity of the separator) being adapted to prevent the catholyte from flowing back to the anode, the catholyte having thus attained the required concentration then constituting said bleaching solution.

3. A process according to claim 2, characterized in that said initial weakly concentrated alkaline solution has a pH between 10 and 13.

4. A process according to claim 2, characterized in that the constituent alkali of said initial alkaline solution is soda.

5. A process according to claim 2, characterized in that the alkali constituent of said initial alkaline solution is formed from a mixture of sodium silicate and sodium sulphate, the chosen detergent composition substantially free from bleaching agent which is contained in said wash bath than being a detergent which is also substantially free from sodium silicate and sodium sulphate.

6. A process according to claim 1, characterized in that said bleaching solution is incorporated into said wash bath at the beginning of the wash cycle.

7. A process according to claim 1, characterized in that said bleaching solution is incorporated into said wash bath during the wash cycle.

8. A process according to claim 1, characterized in that said bleaching solution is incorporated into said wash bath all at once.

9. A process according to claim 1, characterized in that said bleaching solution is incorporated into said wash bath in successive fractions staggered in time.

10. A process according to claim 1, characterized in that said detergent composition contained in said wash bath comprises enzymes, said bleaching solution being incorporated into said wash bath when the enzymatic cleaning operation is sufficiently advanced.

11. A process according to claim 2, characterized in that the initial anodic solution contains sodium chloride which is anodically oxidized into hypochlorite.

12. A process according to claim 11, characterized in that said anolyte containing hypochlorite is incorporated into said wash bath in addition to said catholyte containing hydroperoxide.

13. A process according to claim 2, characterized by using a reactor comprising a plurality of elementary cells connected in series.

14. A process according to claim 2, characterized by using the electrolyse having served as the anolyte in the previous cycle and the alkali content has been decreased in this operation as the catholyte is in the subsequent electroreduction operation for providing a new portion of bleaching solution.

15. A machine for washing and bleaching textile materials, of the type comprising in particular an enclosure for containing said textiles to be treated, means for feeding water to said enclosure, means for feeding a detergent composition into said enclosure, means for forming an aqueous wash bath within said enclosure by mixing said detergent composition with water, and means for agitating said aqueous water bath and said textiles to be treated relative to each other, characterized in that said machine also comprises an electrochemical reactor defined for producing in situ an aqueous alkaline oxidising solution containing hydrogen peroxide ions, and means for introducing said aqueous alkaline oxidising solution into the boy of said aqueous wash bath at the required moment of the wash programme.

**Patentansprüche**

1. Verfahren zum Waschen und Bleichen textiler Stoffe mittels eines wässrigen Laugenbades, das eine im wesentlichen von Bleichmitteln freie Reinigungsverbindung enthält, dadurch gekennzeichnet, daß das Bleichen durch Vermischen des Laugenbades zum gewünschten Moment mit einer frisch zubereiteten wässrigen alkalischen Lösung erreicht wird, die Wasserstoffsuperoxidionen enthält, wobei die oxydierende alkalische wässrige Lösung unmittelbar vor ihrem Vermischen mit dem Laugenbad durch Elektroreduktion von Sauerstoff hergestellt wird.

2. Verfahren nach Anspruch 1, dadurch gekennzeichnet, daß zur Herstellung der wässrigen alkalischen Bleichlösung auf elektrochemischem Wege

— man einen elektrochemischen Reaktor verwendet, der mindestens ein kathodisches Abteil mit einer porösen Kathode und mindestens ein anodisches Abteil mit einer gegenüber dem alkalischen Milieu elektrochemisch inerten Anode sowie einen Separator zwischem dem kathodischen und dem anodischen Abteil aufweist,

— man in das kathodische Abteil eine schwach konzentrierte initiale alkalische Lösung, die den Katholyten bilden soll, sowie eine konzentriertere Lösung in das anodische Abteil einbringt,

— man ein Sauerstoff enthaltendes Gas im Inneren der porösen Kathode unter Druck zirkulieren läßt,

— man den Reaktor unter Spannung setzt, so daß auf der aktiven Oberfläche der Kathode die Bildung von Wasserstoffsuperoxidionen und Hydroxylionen durch Reduktion des Sauerstoffs hervorgerufen wird, wobei die Reduktion eine progressive Konzentrationserhöhung des Katholyten mit Wasserstoffsuperoxidionen und Hydroxylionen mit sich bringt,

— und man in den Reaktor eine ausreichende Menge an Elektrizität strömen läßt, damit die Konzentrationen an Wasserstoffsuperoxidionen und Hydroxylionen des Katholyten gewünschte Werte erreichen, wobei die Arbeitsbedingungen und -parameter (Druck und Durchflußmengen in den elektrodischen Abteilen sowie Porosität des Separators) geeignet sind, einen Rücklauf des Katholyten in Richtung der Anode zu vermeiden, und wobei der Katholyt, der auf diese Weise die gewünschten Konzentrationen erreicht hat, dann die Bleichlösung darstellt.

3. Verfahren nach Anspruch 2, dadurch gekennzeichnet, daß der pH-Wert der schwach konzentrierten initialen alkalischen Lösung zwischen 10 und 13 liegt.

4. Verfahren nach Anspruch 2, dadurch gekennzeichnet, daß das gebundene Alkali der initialen alkalischen Lösung Soda ist.

5. Verfahren nach Anspruch 2, dadurch gekennzeichnet, daß der alkalische Bestandteil der initialen alkalischen Lösung aus einer Mischung von Silikat und Natriumsulfat besteht, wobei die im wesentlichen mit Bleichmittel versehene Reinigungsverbindung in dem Laugenbad enthalten ist, das außerdem so gewählt ist, daß es im wesentlichen frei von Silikat und Natriumsulfat ist.

6. Verfahren nach Anspruch 1, dadurch gekennzeichnet, daß die Bleichlösung dem Laugenbad im wesentlichen zu Beginn des Waschzyklus beigegeben wird.

7. Verfahren nach Anspruch 1, dadurch gekennzeichnet, daß die Bleichlösung dem Laugenbad im Verlauf des Waschzyklus beigegeben wird.

8. Verfahren nach Anspruch 1, dadurch gekennzeichnet, daß die ganze Bleichlösung dem Laugenbad auf einmal beigegeben wird.

9. Verfahren nach Anspruch 1, dadurch gekennzeichnet, daß die Bleichlösung dem Laugenbad in zeitlich aufeinanderfolgenden Teilmengen beigegeben wird.

10. Verfahren nach Anspruch 1, dadurch gekennzeichnet, daß die in dem Laugenbad enthaltene Reinigungsverbindung Enzyme aufweist und die Bleichlösung dem Laugenbad beigegeben wird, wenn der enzymatische Reinigungsvorgang ausreichend fortgeschritten ist.

11. Verfahren nach Anspruch 2, dadurch gekennzeichnet, daß die anodische Lösung NaCl enthält, das anodisch zu NaOCl oxydiert wird.

12. Verfahren nach Anspruch 11, dadurch gekennzeichnet, daß man dem Laugenbad außer dem Wasserstoffsuperoxid enthaltenden Katholyten den mit Hyperchlorit aufgeladenen Anolyten beigibt.

13. Verfahren nach Anspruch 2, dadurch gekennzeichnet, daß man einen Reaktor verwendet, der eine Vielzahl von in Reihe geschalteten Elementarzellen umfaßt.

14. Verfahren nach Anspruch 2, dadurch gekennzeichnet, daß man den bei einem vorangehenden Zyklus als Anolyten dienenden Elektrolyten, dessen Alkaligehalt bei diesem Vorgang gesenkt worden ist, bei dem folgenden Vorgang der Elektroreduktion als Katholyten verwendet, um eine neue Menge an Bleichlösung zu erhalten.

15. Maschine zum Waschen und Bleichen textiler Stoffe vom Typ der Maschinen, die insbesondere einen Behälter aufweisen, der die zu behandelnden textilen Stoffe, Mittel zur Speisung des Behälters mit Wasser, Mittel zum Einführen einer Reinigungsverbindung in den Behälter, Mittel zum Bilden eines wässrigen Laugenbades in dem Behälter durch Mischen der Reinigungsverbindung mit Wasser, und Mittel, um das wässrige Laugenbad und die zu behandelnden textilen Stoffe miteinander zu verrühren, enthalten soll, dadurch gekennzeichnet, daß die Maschine außerdem einen elektrochemischen Reaktor aufweist, der die Erzeugung einer wässrigen, alkalischen, oxydierenden Lösung in situ gewährleisten soll, die Wasserstoffsuperoxidionen und Mittel enthält, um im gewünschten Moment des Waschvorganges die wässrige, alkalische, oxydierende Lösung in das wässrige Laugenbad hinein zu bringen.

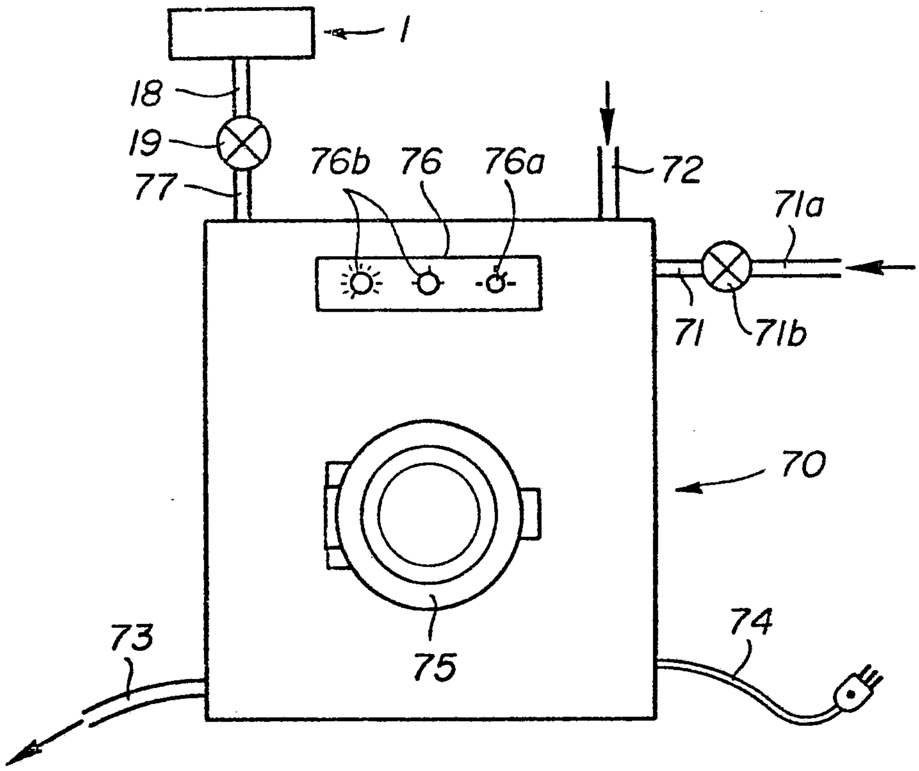


FIG. 1

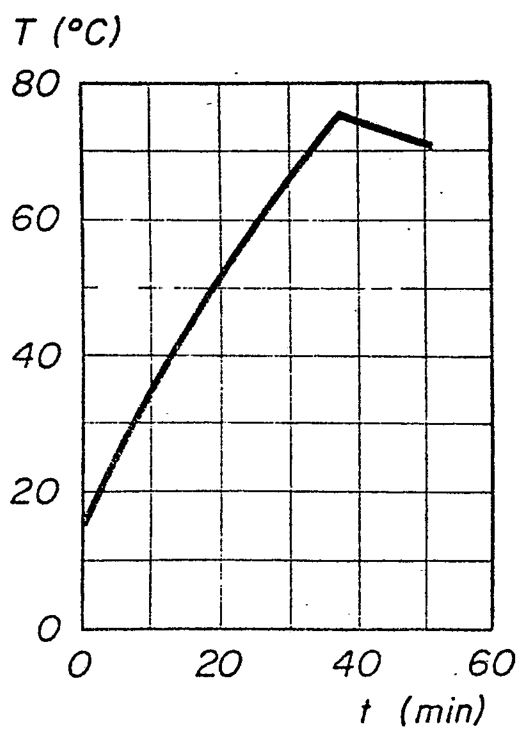


FIG. 4

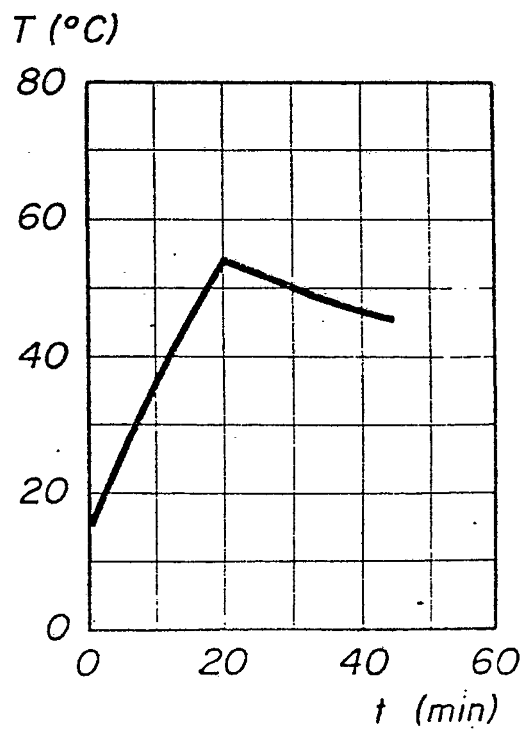


FIG. 5

0 002 423

FIG. 2

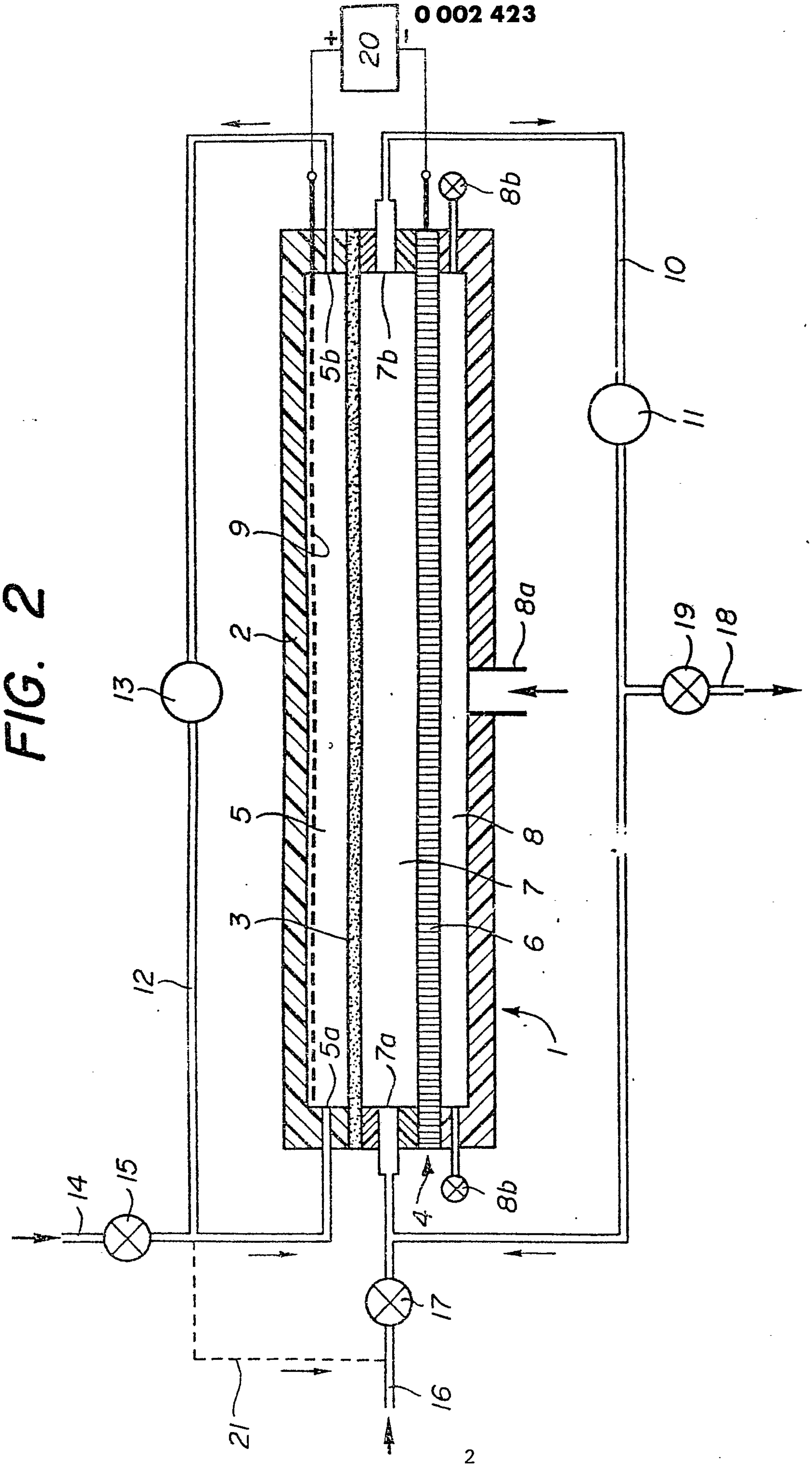

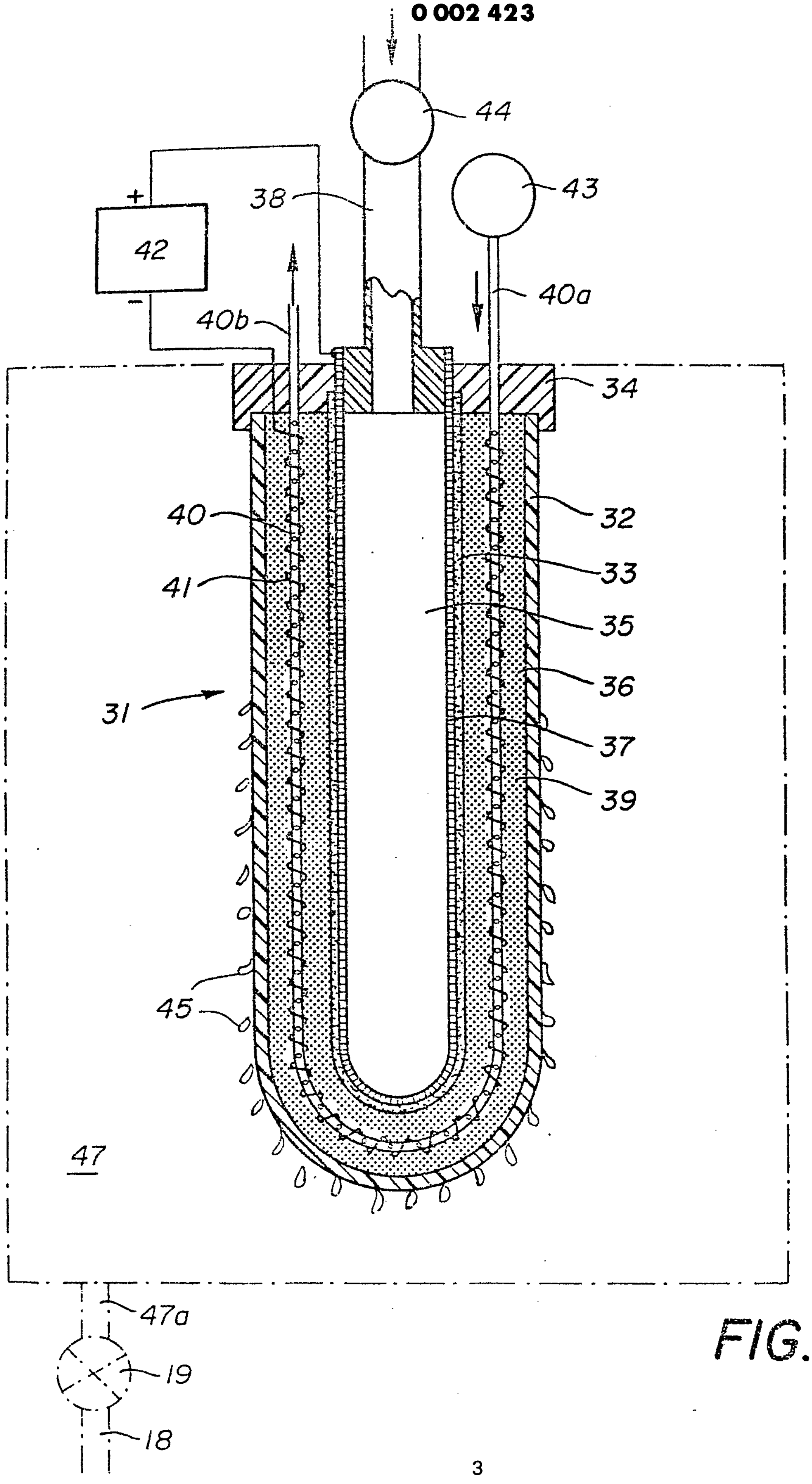


FIG. 3